# EUROPÄISCHE PATENTSCHRIFT

(11) **EP 4 355 652 B1**
(45) Veröffentlichungstag und Bekanntmachung des Hinweises auf die Patenterteilung: **16.07.2025**
(21) Anmeldenummer: 22735288.7
(22) Anmeldetag: 17.06.2022
(51) Int. Cl.: B64C 1/14

(54) **FLUGZEUG-SCHIEBETÜR**
AIRCRAFT SLIDING DOOR
PORTE COULISSANTE D'AÉRONEF

(30) Priorität: 18.06.2021 AT 504932021
(43) Veröffentlichungstag der Anmeldung: 24.04.2024
(73) Patentinhaber: FACC AG, 4910 Ried im Innkreis (AT)
(72) Erfinder: SEIS, Michael, Ebreichsdorf 2483 (AT)
(74) Vertreter: SONN Patentanwälte GmbH & Co KG
(86) Internationale Anmeldenummer: PCT/AT2022/060203
(87) Internationale Veröffentlichungsnummer: WO 2022/261692

(56) Entgegenhaltungen:
- WO-A1-91/00823
- DE-U1- 202011 102 484
- US-A1- 2013 020 439
- US-A1- 2019 383 068

## Beschreibung

Die Erfindung betrifft eine Flugzeug-Schiebetür, aufweisend:
ein zwischen einer Schließstellung und einer Offenstellung in Öffnungs- bzw. Schließrichtung verschiebliches Türblatt mit einem Türoberteil und einem Türunterteil, welche in der Schließstellung in einem ausgezogenen Zustand und in der Offenstellung in einem zusammengeschobenen Zustand angeordnet sind,
eine zur Öffnungs- bzw. Schließrichtung geneigte Führungsschiene zur Führung des Türblatts zwischen der Schließ- und der Offenstellung,
eine Antriebseinrichtung mit einem Elektromotor zur Unterstützung der Bewegung des Türblatts von der Offen- in die Schließstellung.

Weiters betrifft die Erfindung ein Flugzeug, aufweisend:
einen Innenraum mit einem ersten Raumbereich und mit einem zweiten Raumbereich,
eine Flugzeug-Schiebetür, welche zwischen dem ersten Raumbereich und dem zweiten Raumbereich des Innenraums angeordnet ist.

D1-US 2013/020439 A1 offenbart verschiedene Ausführungsvarianten einer Abtrennung für einen Durchgang in einer Flugzeugkabine. Im Falle eines Motorschadens oder Stromausfalls kann die Türe manuell bewegt werden.

Aus der EP 2 540 616 B1 ist eine Flugzeug-Schiebetür ("pocket door") bekannt. Die Schiebetür weist ein zweiteiliges Türblatt auf, das beim Öffnen der Tür quer zur Öffnungsrichtung zusammengeschoben und somit platzsparend verstaut wird. Die Flugzeug-Schiebetür kann zur Trennung von zwei Raumbereichen im Flugzeug verwendet werden, wobei das Türblatt in einer Offenstellung in einer Tasche ("pocket") einer Zwischenwand verstaut ist. Dazu ist die Flugzeug-Schiebetür an die Geometrie im Inneren des Flugzeugs angepasst. Die Oberkante des Türrahmens ist gewölbt und somit an den Querschnitt des Flugzeugs angepasst. Das Türblatt weist eine dementsprechende Wölbung auf, damit die Türöffnung vollständig vom Türblatt verschlossen werden kann. Das Türblatt weist ein Türblattoberteil und ein Türblattunterteil auf, welche mit Linearführungen verbunden sind. Die Linearführung des Türblattoberteils ist in Schließrichtung schräg ansteigend angeordnet. Dadurch wird erreicht, dass das an die gewölbte Oberkante der Türöffnung angepasste Türblattoberteil von unten her in die Wölbung einfahren kann, womit ein vollständiges Schließen der Türe erreicht werden kann. Die Linearführung des Türblattunterteils ist in Schließrichtung schräg absteigend angeordnet. Dadurch wird das Türblattoberteil beim Öffnen der Tür nach oben und in das Innere des in diesem Bereich hohlen Türblattoberteils bewegt. Zur Kraftunterstützung ist eine Gasdruckfeder vorgesehen, die das Schließen der Flugzeug-Schiebetür unterstützt.

Aus der FR 3 050 717 A1 ist andersartige Trennvorrichtung zur Trennung einer Flugzeugkabine bekannt.

In der WO 2018/132856 A1 und WO 91/00823 A1 sind Flugzeugschiebetüren gezeigt.

In der EP 2 540 616 B1 werden zudem elektromotorisch betriebene Schließmechanismen erwähnt, jedoch als nachteilig dargestellt, weil solche Schließmechanismen bei einem Ausfall der Stromversorgung nicht mehr vollständig einsatzfähig seien.

Es ist daher Aufgabe der Erfindung, eine verstaubare Schiebetür der eingangs angeführten Art zu schaffen, welche zumindest einzelne Nachteile des Stands der Technik lindert oder beseitigt. Demnach besteht eine Aufgabe der Erfindung bevorzugt darin, eine Schiebetür bereitzustellen, die einfach und zuverlässig zu öffnen und zu schließen ist und hohen Sicherheitsstandards mit geringem baulichen Aufwand genügt.

Gelöst wird die Aufgabe durch eine Schiebetür mit den Merkmalen von Anspruch 1. Bevorzugte Ausführungsbeispiele sind in den abhängigen Ansprüchen angegeben.

Erfindungsgemäß weist die Antriebseinrichtung eine mit dem Elektromotor verbundene Spindel, insbesondere eine Kugelumlaufspindel, auf, welche zur Öffnungs- bzw. Schließrichtung geneigt ist, so dass das Türblatt in einem spannungslosen Zustand des Elektromotors entlang der Spindel selbständig in die Offenstellung überführt wird.

In der Offenstellung der Schiebetür, bei freigegebener Durchgangsöffnung, sind das Türoberteil und das Türunterteil des Türblatts quer zur Öffnungs- bzw. Schließrichtung zusammengeschoben. Da das Türober- und das Türunterteil in der Offenstellung überlappend angeordnet sind, kann das Türblatt in der Offenstellung platzsparend, insbesondere in einer Zwischenwand zwischen zwei Raumbereichen des Flugzeug-Innenraums, verstaut sein. In der Schließstellung ist das Türblatt quer zur Schließrichtung ausgezogen, um die Durchgangsöffnung zu verschließen. Die Flugzeug-Schiebetür kann beispielsweise zur Trennung von zwei Raumbereichen im Innenraum eines Flugzeugs verwendet werden. Die Flugzeug-Schiebetür ist daher bevorzugt an die Geometrie des Innenraums angepasst. Die Oberkante des Türoberteils ist daher bevorzugt gewölbt. Bevorzugt sind das Türober- und das Türunterteil jeweils mit mindestens einer Führungsschiene verbunden. Die zumindest eine Führungsschiene des Türoberteils ist in Öffnungsrichtung gesehen nach unten geneigt. Das der Durchgangsöffnung zugewandte Ende der Führungsschiene liegt somit höher als das der Durchgangsöffnung abgewandte Ende der Führungsschiene. Dadurch wird erreicht, dass das an die gewölbte Oberkante der Türöffnung angepasste Türoberteil von unten her in die Wölbung einfahren kann, womit ein vollständiges Schließen der Türe erreicht wird. Bevorzugt ist zumindest eine Führungsschiene des Türunterteils in Öffnungsrichtung gesehen nach oben geneigt angeordnet. Je nach Ausführung kann eine Verriegelungsvorrichtung vorgesehen sein, mit der das Türblatt in der Schließstellung verriegelt werden kann. Zum Schließen der Schiebetür ist das Türblatt mit dem Elektromotor der Antriebseinrichtung verbunden, um die Schiebetür zu schließen oder zu öffnen. Erfindungsgemäß weist die Antriebseinrichtung die Spindel auf, welche relativ zur (vorzugsweise horizontalen) Öffnungs- bzw. Schließrichtung in der Schiebeebene in einem von 0° bzw. 180° abweichenden Neigungswinkel geneigt ist. Die Anordnung und Ausführung der Spindel ist darauf ausgelegt, dass die Schiebetür in einem spannungslosen Zustand, d.h. in einem Zustand ohne Kraftunterstützung, beispielsweise bei Ausfall der Spannungsversorgung, selbständig, d.h. ausschließlich unter der Wirkung der Schwerkraft, von der Schließ- in die Offenstellung überführt wird, um die Durchgangsöffnung freizugeben. Die Spindel ist in Öffnungsrichtung gesehen nach unten geneigt. Das der Durchgangsöffnung zugewandte Ende der Spindel liegt somit höher als das der Durchgangsöffnung abgewandte Ende der Spindel. Der Neigungswinkel der Spindel zur Öffnungs- bzw. Schließrichtung beträgt bevorzugt von 25° bis 45°, besonders bevorzugt von 30° bis 40°, beispielsweise im Wesentlichen 34°. Bevorzugt ist die Spindel im Wesentlichen parallel zur Führungsschiene des Türoberteils angeordnet. Die Schiebetür wird somit im Falle eines Spannungsausfalls oder eines damit verbundenen Notfalls selbständig geöffnet, da die Gravitation ein Gleiten der Schiebetür in die Öffnungsstellung bewirkt. Das Türunterteil und das Türoberteil werden dabei mit Hilfe der Führungsschiene zusammengeschoben. Das Türunterteil ist vorzugsweise leichter als das Türoberteil, um ein automatisches Zusammenschieben zu gewährleisten. Die Schiebeebene ist gleichzeitig die Haupterstreckungsebene der Schiebetür. Die Spindel weist ein Außengewinde auf, das den zurückzulegenden Weg entlang der Spindel erhöht und somit die Öffnungsgeschwindigkeit der Schiebetür drosselt. Bei einer besonders bevorzugten Ausführungsform weist die Schiebetür eine im Wesentlichen konstante Öffnungsgeschwindigkeit von der Schließ- bis in die Offenstellung auf. Vorteilhafterweise wird die Schiebetür so sanft geöffnet. Besonders bevorzugt ist es, wenn die Antriebseinrichtung die Schiebetür frei von zusätzlichen Gasdruckfedern und Dämpfern vom offenen in den geschlossen und vom geschlossen in den offenen Zustand überführen kann. Solche Zusatzeinrichtungen waren bei bekannten Ausführungen, z.B. mit einem Zahnriemenantrieb, erforderlich, um die Schiebetür beim Verstauen über die Schwerkraft im letzten Abschnitt der Bewegung abzubremsen.

Für die Zwecke dieser Offenbarung beziehen sich die Orts- und Richtungsangaben, wie "horizontal", "vertikal", "oben" oder "unten", auf den bestimmungsgemäßen Einbauzustand der Schiebetür im Flugzeug bei horizontaler Ausrichtung des Flugzeugs.

Der Elektromotor ist bevorzugt ein bürstenloser Gleichstrommotor.

Der Elektromotor ist bevorzugt dazu eingerichtet, die Spindel zu drehen, um die Schiebetür von der Offenstellung in die Schließstellung, vorzugsweise zudem von der Schließ- in die Offenstellung, zu überzuführen. Bevorzugt kann der Elektromotor über ein Getriebe mit der Spindel verbunden sein. Mit dem Getriebe kann eine Motordrehzahl des Elektromotors in eine Antriebsdrehzahl der Spindel übersetzt werden. Das Übersetzungsverhältnis zwischen Motor- und Antriebsdrehzahl beträgt bevorzugt von 1:1 bis 1:10.

Bei einer bevorzugten Ausführung weist die Antriebseinrichtung eine die Spindel aufnehmende Mutter auf, welche sich durch Drehen der Spindel mit dem Elektromotor linear entlang der Spindel bewegt. Die Spindel ist bevorzugt eine Kugelumlaufspindel. Bei dieser Ausführung sind Laufrillen in der Spindel und der Mutter eingearbeitet, welche Kugeln aufnehmen und so einen Formschluss zwischen Spindel und Mutter herstellen. Bevorzugt sind Rückführkanäle in der Mutter vorgesehen, über die die Kugeln rückgeführt werden. Die Bahn der Kugeln ist somit geschlossen. Eine Kugelumlaufspindel ist beispielsweise aus der DE 100 22 715 B4 bekannt. Die Mutter ist bevorzugt so mit dem Türblatt verbunden, dass die Bewegung der Mutter entlang der Spindel in die Öffnungs- bzw. Schließbewegung des Türblatts umgewandelt wird. Durch das Zusammenwirken der Mutter und der Spindel wird die Öffnungsgeschwindigkeit im spannungslosen Zustand des Elektromotors so weit gedrosselt, dass bevorzugt zusätzliche Dämpfungselemente, wie Gasdruckfedern, zur Dämpfung der Öffnungsbewegung des Türblatts entfallen können. Weiters kann der Elektromotor in diesem Fall als Generator ebenfalls mitbremsen.

In einer bevorzugten Ausführungsform ist die Mutter über eine Mitnahmeeinrichtung mit einer Türaufhängung für das Türoberteil verbunden. Die Türaufhängung kann beispielsweise an einem (vorzugsweise im Wesentlichen vertikalen) Längsrand des Türoberteils befestigt sein. Mit Hilfe der Mitnahmeeinrichtung wird die Bewegung der Mutter im angetriebenen Zustand des Elektromotors auf die Türaufhängung übertragen, welche das Türblatt insbesondere von der Schließ- in die Offenstellung zieht.

Zur Kraftübertragung zwischen der Antriebseinrichtung und dem Türblatt ist es günstig, wenn die Mitnahmeeinrichtung ein mit der Mutter verbundenes Mitnahmeelement, insbesondere einen Mitnahmebolzen, und eine mit der Türaufhängung verbundene Aufnahme aufweisen. Das Mitnahmeelement, insbesondere ein Mitnahmebolzen, überträgt die Bewegung der Mutter entlang der Spindel auf die Aufnahme, welche so mit der Türaufhängung verbunden ist, dass das Türblatt mit Hilfe der Antriebseinrichtung geschlossen, insbesondere auch geöffnet, werden kann.

In einer bevorzugten Ausführungsform ist vorgesehen, dass
- das Mitnahmeelement in einer ersten Richtung parallel zum Türblatt und senkrecht zur Längsachse der Spindel beweglich mit der Aufnahme an der Türaufhängung verbunden ist und/oder dass
- das Mitnahmeelement in einer zweiten Richtung senkrecht zum Türblatt und senkrecht zur Längsachse der Spindel beweglich mit der Aufnahme an der Türaufhängung verbunden ist und/oder dass
- das Mitnahmeelement in einer dritten Richtung parallel zur Längsachse der Spindel fest mit der Aufnahme verbunden ist.

Die Beweglichkeit in die erste und zweite Richtung trägt dazu bei, ein Verkeilen des Türblatts zu verhindern. Bevorzugt erlauben die Freiheitsgrade in die erste und zweite Richtung ausgehend von der Neutralstellung jeweils eine Bewegung von zumindest +/- 2 Millimeter (mm), insbesondere von 3 mm bis 10 mm, beispielsweise im Wesentlichen +/- 4 mm. Nur in die dritte Richtung parallel zur Längsachse der Spindel und damit in Richtung der Bewegung der Mutter entlang der Spindel ist das Mitnahmeelement fest, d.h. ohne Spiel, mit der Aufnahme verbunden. Dadurch kann eine effektive Mitnahme der Aufnahme (und damit auch des Türblatts) gewährleistet werden. Weiters können entlang der dritten Richtung ruckartige Bewegungen des Türblatts durch Fremdeinwirkung erkannt und gegebenenfalls das Schließen der Schiebetür abgebrochen werden.

Vorzugsweise weist die Aufnahme eine Aussparung auf, in welcher ein Halter für das Mitnahmeelement in der ersten Richtung beweglich und in der dritten Richtung im Wesentlichen unbeweglich angeordnet ist, wobei das Mitnahmeelement in der zweiten Richtung beweglich am Halter angeordnet ist. Der Halter ermöglicht es auf einfache Weise, Bewegungen des Mitnahmeelements nur in die dritte Richtung kraftschlüssig auf die Aufnahme am Türblatt zu übertragen.

In einer bevorzugten Ausführungsform ist eine Einrichtung zur Erfassung einer Drehmomentüberschreitung des Elektromotors vorgesehen, mit welcher ein blockierter Zustand des Türblatts beim Überführen zwischen der Schließ- und der Offenstellung feststellbar ist. Eine Blockade des Türblattes könnte zu einer Beschädigung der Schiebetür, insbesondere des Türblattes und/oder der Antriebseinrichtung, oder zu einer Verletzung eines Benutzers führen. Wird eine Drehmomentüberschreitung erfasst, kann die Antriebsrichtung des Elektromotors umgekehrt werden oder, falls das nicht möglich ist, beispielsweise bei einem Softwarefehler, die Schiebetür spannungslos geschaltet, so dass die Schiebetür mit der Schwerkraft in die Offenstellung überführt wird.

In einer bevorzugten Ausführungsform ist der Elektromotor verdrehbar an einem Halterahmen der Antriebseinrichtung gelagert. Der Elektromotor kann aufgrund des wirkendenden Drehmoments im Betrieb des Elektromotors um seine Antriebsachse verdreht bzw. verschwenkt werden. Eine Beschädigung des Elektromotors oder der Spindel aufgrund eines erhöhten Drehmoments kann in dieser Anordnung vermieden werden. Aus der Verdrehung des Motors kann weiters auf ein überhöhtes Drehmoment, beispielsweise aufgrund einer Blockade der Tür, geschlossen werden.

In einer bevorzugten Ausführungsform weist die Antriebseinrichtung zumindest eine erste Feder auf, welche den Elektromotor aus einem in die eine Richtung verdrehten ersten Zustand in Richtung einer Neutralstellung drückt, wobei die Antriebseinrichtung bevorzugt eine zweite Feder aufweist, welche den Elektromotor aus einem in die andere Richtung verdrehten zweiten Zustand in Richtung der Neutralstellung drückt. Der Elektromotor ist ausgehend von seiner Neutral- bzw. Mittelstellung um seine Antriebsachse in beide Richtungen verdrehbar gelagert. Der Elektromotor wird beim Öffnen der Schiebetür in die eine Richtung und beim Schließen der Schiebetür in die andere Richtung belastet. Die beiden Federn drücken den Elektromotor jeweils in die Neutralstellung und wirken so dem Drehmoment auf den Elektromotor entgegen. Die Verschwenkung des Elektromotors ist proportional zu dem auf ihn wirkenden Drehmoment.

In einer bevorzugten Ausführung weist die Einrichtung zur Erfassung des blockierten Zustands des Türblatts einen Sensor auf, welcher eine Verdrehung des Elektromotors um seine Antriebsachse aufgrund der Drehmomentüberschreitung erfasst. Die Verschwenkung bzw. die Verdrehung des Elektromotors ist proportional zu dem auf ihn wirkenden Drehmoment. Somit kann die Drehmomentüberschreitung anhand der Verdrehung des Elektromotors festgestellt werden. Der Sensor erfasst das Überschreiten eines bestimmten Verdrehwinkels, um eine entsprechende Drehmomentüberschreitung festzustellen.

Um den Verdrehwinkel entsprechend dem maximalen erwünschten Drehmoment mit konstruktiv einfachen Mitteln erfassen zu können, weist die Einrichtung zur Erfassung des blockierten Zustands des Türblatts bei einer bevorzugten Ausführungsform ein drehfest mit dem Elektromotor verbundenes Auslöseelement auf, welches bei der Verdrehung des Elektromotors aufgrund der Drehmomentüberschreitung den Sensor auslöst.

Weiters kann die Antriebseinrichtung eine Steuereinheit aufweisen, welche den Elektromotor bei Erfassung des blockierten Zustands des Türblatts in einen spannungslosen Zustand schaltet. Durch das Abschalten des Elektromotors aufgrund der Drehmomentüberschreitung bei einer Blockade der Schiebetür kann insbesondere die Sicherheit des Nutzers gewährleistet werden.

Bevorzugt weist die Spindel eine Übersetzung auf, mit welcher eine vollständige Umdrehung der Spindel eine Bewegung des Türblatts in Schließ- bzw. Offenrichtung von weniger als 30 mm, insbesondere von 5 mm bis 15 mm, bewirkt. Durch die Übersetzung wird der Weg entlang des Außengewindes der Spindel im Vergleich zum Vorschub der Mutter entlang der Längsachse der Spindel erhöht.

Vorzugsweise ist ein erster Endschalter zur Erfassung der Offenstellung des Türblatts und ein zweiter Endschalter zur Erfassung der Schließstellung des Türblatts vorgesehen. Die beiden Endschalter erfassen die jeweiligen Endpositionen des Türblatts. Der erste und/oder der zweite Endschalter kann mit der Steuereinheit verbunden sein. Somit kann ein Auslösen des ersten bzw. zweiten Sensors zur Steuerung des Elektromotors, insbesondere zum Ausschalten des Elektromotors, herangezogen werden.

Um die Zugangsöffnung bei Auftreten außergewöhnlicher Umstände, insbesondere in einer Gefahrensituation, unabhängig vom Schiebemechanismus freigeben zu können, ist es von Vorteil, wenn zumindest eines von Türoberteil und Türunterteil um eine im Wesentlichen senkrecht zur vorgegebenen Bahn verlaufende Schwenkachse verschwenkbar gelagert ist, wobei die Verschwenkung des jeweiligen Türteils im Betriebszustand mittels zumindest eines Sicherungselements gesperrt ist. Hiermit wird ein an sich bekannter Sicherheitsmechanismus geschaffen, welcher beispielsweise dann ausgelöst werden kann, wenn zwischen Innen- und Außenseite der Schiebetür ein bestimmter Druckunterschied auftritt. Alternativ kann das Sicherungselement durch manuelle Kraftaufwendung entsichert werden, beispielsweise dann, wenn der Schiebemechanismus zum Öffnen der Schiebetür versagt. Somit kann die Zugangsöffnung in außergewöhnlichen Situationen durch Aufschwingen der Schiebetür freigegeben werden.

Die vorliegende Erfindung wird anhand eines in den Zeichnungen dargestellten Ausführungsbeispiels weiter erläutert.
Fig. 1 zeigt eine erfindungsgemäße Flugzeug-Schiebetür mit einer Antriebseinrichtung, bei welcher ein Elektromotor eine Spindel antreibt, wobei bei Ausfall der Stromversorgung des Elektromotors die Schiebetür selbständig in die Offenstellung gleitet.
Fig 2 zeigt die Antriebseinrichtung der Flugzeug-Schiebetür gemäß Fig. 1 in Explosionsdarstellung.
Fig. 3 zeigt eine Explosionsdarstellung einer mit einer Türaufhängung verbundenen Aufnahme, auf welche die Bewegung einer entlang der Spindel wandernden Mutter der Antriebseinrichtung übertragen wird.

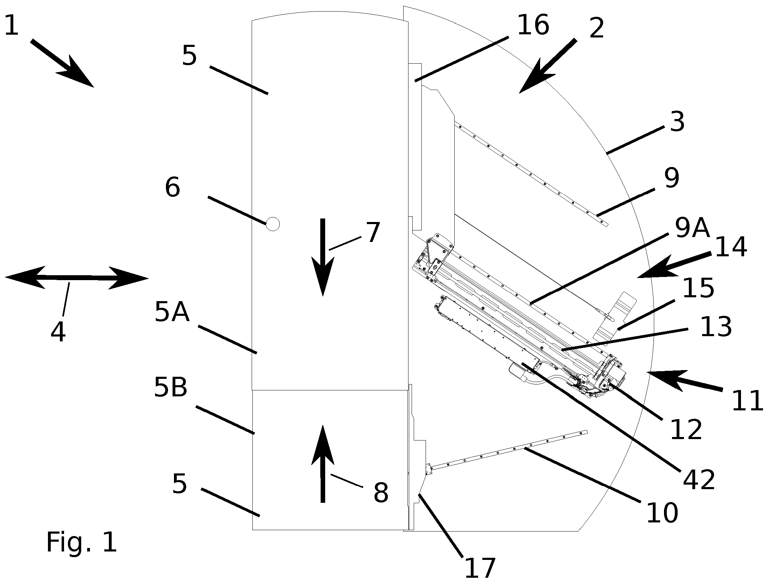

In Fig. 1 ist eine verstaubare Flugzeug-Schiebetür 1 ("pocket door") gezeigt, welche in der gezeigten Ausführung im Passagierraum eines Flugzeugs zum Einsatz kommt. Die Schiebetür 1 verschließt eine Durchgangsöffnung innerhalb eines Türrahmens 2, welcher beispielsweise als Zwischenwand des Flugzeugs ausgebildet ist. Der Türrahmen 2 weist eine Umrandung 3 auf, welche in der gezeigten Ausführung entsprechend der inneren Kontur des Flugzeugrumpfes gekrümmt ist. Somit steht neben der Durchgangsöffnung lediglich ein reduzierter Stauraum zur Verfügung, welcher eine Anpassung der Schiebetür 1 erfordert, um zu verhindern, dass die Schiebetür 1 beim Öffnungsvorgang durch die gekrümmte Umrandung 3 der Rahmenstruktur des Türrahmens 2 blockiert wird. Die Schiebetür 1 ist zwischen der in Figur 1 gezeigten Schließstellung, in welcher die Durchgangsöffnung verschlossen ist, und einer (nicht gezeigten) Offenstellung, in welcher die Durchgangsöffnung freiliegt, entlang einer horizontalen Bahn, der Öffnungs- bzw. Schließrichtung 4, verschiebbar. Die Schiebetür 1 weist zwei das Türblatt 5 bildende Türteile auf, welche in der gezeigten Ausführung als Türoberteil 5A bzw. Türunterteil 5B ausgeführt sind. In der Schließstellung der Schiebetür 1 sind die Türteile 5 und 5B in einer ausgezogenen Position angeordnet, in welcher die Türteile 5A und 5B die Durchgangsöffnung vollständig ausfüllen.

Um die Schiebetür 1 platzsparend neben der Durchgangsöffnung verstauen zu können, werden die Türteile 5A und 5B senkrecht zur Öffnungsrichtung 4 zusammengeschoben, wenn die Schiebetür 1 beispielsweise mittels eines Handgriffs 6 geöffnet wird. Das Türoberteil 5A wird beim Schließen in vertikaler Richtung nach unten (vgl. Pfeil 7) und das Türunterteil 5B in vertikaler Richtung nach oben (vgl. Pfeil 8) verschoben, so dass die Türteile 5A und 5B beim Schließen zunehmend überlappen. Bei Erreichen der Offenstellung der Schiebetür 1 sind die Unterkanten der Türteile 5A und 5B im Wesentlichen auf gleicher Höhe angeordnet, so dass die Gesamthöhe der Schiebetür 1 in der zusammengeschobenen Stauposition der Höhe (bzw. Länge) des Türoberteils 5A entspricht.

Wie aus Fig. 1 weiters ersichtlich, ist das Türoberteil 5A mittels einer Führungsschiene 9 verschieblich gelagert, welche an der Rahmenstruktur des Türrahmens 2 angebracht ist. In der gezeigten Ausführung ist der Türoberteil 5A zur Erhöhung der Stabilität mit einer zweiten Führungsschiene 9A verbunden, welche parallel zur Führungsschiene 9 verläuft. Das Türunterteil 5B ist entsprechend mittels einer an der Rahmenstruktur des Türrahmens 2 befestigten Führungsschiene 10 verschieblich.

Wie aus Fig. 1 weiters ersichtlich ist, verlaufen die Führungsschienen 9, 9A, mit welchen der Türoberteil 5A verschieblich gelagert ist, unter einem ersten Neigungswinkel zur Schieberichtung 4 der Schiebetür 1. Der Neigungswinkel der Führungsschienen 9, 9A bewirkt, dass das Türoberteil 5A beim Öffnen der Schiebetür 1 in Pfeilrichtung 7 nach unten geführt wird. Die Führungsschiene 10 des Türunterteils 5B ist entsprechend unter einem zweiten Neigungswinkel zur horizontalen Bahn 4 der Schiebetür 1 geneigt, welcher bewirkt, dass das Türunterteil 5B beim Öffnen der Schiebetür 1 in Pfeilrichtung 8 nach oben geführt wird. Die Führungsschienen 9, 9A, 10 sind hierbei in Richtung der Schieberichtung 4 gesehen zusammenlaufend angeordnet, so dass die Türteile 5A und 5B beim Öffnen der Schiebetür 1 bis zum Erreichen der zusammengeschobenen Stauposition in entgegengesetzte Richtungen verschoben werden. In der gezeigten Ausführung weisen die parallelen Führungsschienen 9, 9A des Türoberteils 5A einen steileren Verlauf als die Führungsschiene 10 des Türunterteils 5B auf. Auf diese Weise wird der Türoberteil 5A bei der Überführung in die Stauposition um eine längere Strecke in Pfeilrichtung 7 nach unten verschoben als der Türunterteil 5B in Pfeilrichtung 8 nach oben. Der erste Neigungswinkel der Führungsschienen 9, 9A des Türoberteils 5A kann beispielsweise im Wesentlichen 34° betragen, wobei der Neigungswinkel der Führungsschiene 10 des Türunterteils 5B beispielsweise im Wesentlichen 13° betragen kann.

Wie aus Fig. 1 weiters ersichtlich, ist das Türoberteil 5A mit einer Antriebseinrichtung 11 gekoppelt, um die Türteile 5A und 5B selbsttätig von der Offenstellung in die Schließstellung zu überführen. Hierfür weist die Antriebseinrichtung 11 einen Elektromotor 12 auf. Der Elektromotor 12 treibt eine Spindel 13 an, die das Türblatt 5 von der Offenstellung in die Schließstellung überführt. Die Spindel 13 ist wiederum in einem dritten Neigungswinkel zur Horizontalen geneigt, wodurch das Türblatt 5 in einem spannungslosen Zustand des Elektromotors 12 entlang der Spindel 13 selbständig in die Offenstellung überführt wird. In der gezeigten Ausführung entspricht der dritte Neigungswinkel dem ersten Neigungswinkel der Führungsschienen 9, 9A.

Die Schiebetür 1 weist zudem einen Rastmechanismus 14 mit einer an der Rahmenstruktur des Türrahmens 2 angebrachten Rasteinheit 15 auf, welche eine Rastaufnahme für ein entsprechendes, mit einer Türaufhängung 16 des Türoberteils 5A verbundenes Rastelement (nicht gezeigt) bildet. Beim Erreichen der Offenstellung der Schiebetür 1 wird das Rastelement in der Rastaufnahme der Rasteinheit 15 verrastet. Das Türunterteil ist an einer weiteren Türaufhängung 17 befestigt.

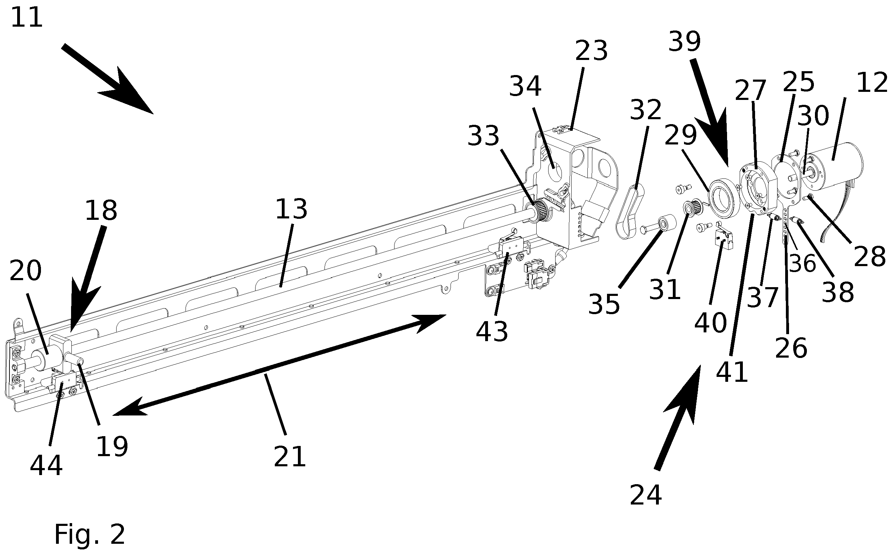

Figur 2 zeigt die Antriebseinrichtung 11 aus Fig. 1. Es ist der Elektromotor 12 zu sehen, der die Spindel 13, hier als Kugelumlaufspindel ausgebildet, antreibt. Auf der Spindel ist eine Mutter 20, hier eine Kugelumlaufmutter, angeordnet. In Laufrillen zwischen der Spindel 13 und der Mutter 20 sind Kugeln (nicht gezeigt) angeordnet, mit denen die Bewegung der Spindel 13 umgesetzt wird. Diese Kugeln bewegen sich bei der Drehung der Spindel 13 axial. Durch Rückführkanäle in der Mutter 20 werden die Kugeln rückgeführt und ein Kreislauf entsteht.

Um die Schiebetür 1 von der Offen- in eine Schließstellung überzuführen, dreht der Elektromotor 12 die Spindel 13, wodurch die Mutter 20 entlang der Längsrichtung 21 der Spindel 13 bewegt wird.

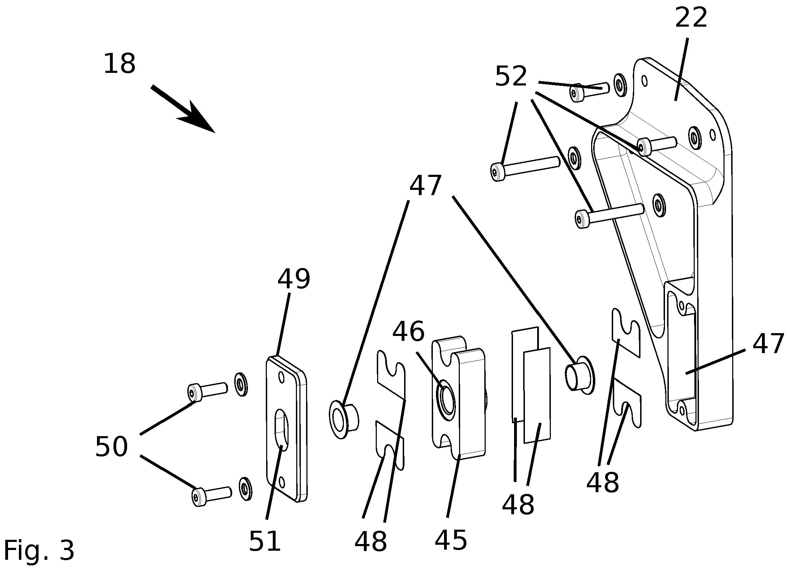

Die Mutter 20 ist über eine Mitnahmeeinrichtung 18 mit dem Türoberteil 5A verbunden. Die Mitnahmeeinrichtung 18 weist ein mit der Mutter 20 verbundenes Mitnahmeelement, in dem gezeigten Ausführungsbeispiel einen Mitnahmebolzen 19, und eine mit der Türaufhängung verbundene Aufnahme 22 (siehe Figur 3) auf.

Die Spindel 13 weist eine solche Übersetzung auf, dass eine vollständige Umdrehung der Spindel 13 eine Bewegung des Türblatts 5 in Schließ- bzw. Offenrichtung entlang der Öffnungs- bzw. Schließrichtung 4 von beispielsweise im Wesentlichen 10 mm bewirkt. Dazu weist die Spindel 13 ein Außengewinde auf, das über die Kugeln mit der Mutter 20 zusammenwirkt. Die Steigung des Gewindes und der Durchmesser der Spindel 13 beeinflussen die Übersetzung.

Wie aus Fig. 2 weiters ersichtlich, weist die Antriebseinrichtung einen stationären Halterahmen 23 auf, an welchem die Spindel 13 drehbar gelagert ist. Darüber hinaus ist an dem Halterahmen 23 eine Motorbaugruppe 24 verdreh- bzw. verschwenkbar gelagert. Die Motorbaugruppe 24 weist den Elektromotor 12 auf, der an einem Lager 29 angeordnet ist. Zwischen dem Elektromotor 12 und dem Lager 29 ist ein Halter 25 mit einem nach unten abstehenden Steg 26 vorgesehen, dessen Funktion weiter unten beschrieben wird. Die einzelnen Bestandteile sind mittels Schrauben 28 aneinander befestigt. Das Lager 29 ist in einem Lagergehäuse 27 angeordnet. Eine Abtriebswelle 30 des Elektromotors 12 ist über ein Getriebe mit der Spindel 13 verbunden. In der gezeigten Ausführung ist das Getriebe durch ein erstes Zahnriemenrad 31 und ein zweites Zahnriemenrad 32 gebildet, welche über einen Zahnriemen 33 miteinander verbunden sind. Die Antriebswelle 30 ist mit dem ersten Zahnriemenrad 31 verbunden. Mittels des Riemens 33 wird das Drehmoment von dem ersten Zahnriemenrad 31 auf das zweite Zahnriemenrad 32 übertragen, welches mit der Spindel 13 verbunden ist. Das zweite Zahnriemenrad 32 weist einen größeren Durchmesser als das erst Zahnriemenrad 31 auf, wodurch eine Übersetzung von beispielsweise 1:2 zwischen der Motordrehzahl der Abtriebswelle 30 des Elektromotors 12 und der Antriebsdrehzahl der Spindel 13 erzielt wird. Mit Hilfe eines Spannrades 35 wird der Zahnriemen 33 gespannt.

Die Antriebswelle 30 ragt durch eine Durchführung 34 des Halterahmens 23. Der Halterahmen 23 ist mit dem Rahmengestell des Türrahmens 2 verbunden.

Wie aus Fig. 2 weiters ersichtlich, weist der Halter 25 am Steg 26 einzelne Bohrungen 36 auf, die in unterschiedlichen Abständen vom Mittelpunkt des Halters 25 angeordnet sind. In eine dieser Bohrungen 36 greifen zwei Federn 37, 38 ein, die jeweils mit dem Halterahmen 23 verbunden sind. Eine erste Feder 37 drückt den Elektromotor 12 aus einem in die eine Richtung verschwenkten Schwenkzustand in Richtung einer Neutralstellung. Eine zweite Feder 38 drückt den Elektromotor 12 aus einem in die andere Richtung verschwenkten zweiten Schwenkzustand in Richtung der Neutralstellung. Somit führen die Federn 37, 38 zu einer Neutralstellung des Elektromotors 12 bzw. der Motorbaugruppe 24. Wirkt ein Drehmoment auf den Elektromotor 12, verdreht sich die Motorbaugruppe 24 um die Achse der Antriebswelle 30 gegen die Federn 37, 38, bis ein Gleichgewichtszustand zwischen Drehmoment und Federkraft erreicht ist. Die Verdrehung des Elektromotors 12 ist somit proportional zum Drehmoment, das auf den Elektromotor 12 wirkt.

Wie aus Fig. 2 weiters ersichtlich, ist eine Einrichtung 39 zur Erfassung einer Drehmomentüberschreitung des Elektromotors 12 vorgesehen, mit welcher ein blockierter Zustand des Türblatts 5 beim Überführen zwischen der Schließ- und der Offenstellung feststellbar ist. Die Einrichtung 39 zur Erfassung der Drehmomentüberschreitung weist einen Sensor 40 auf, welcher eine Verschwenkung des Elektromotors 12 aufgrund der Drehmomentüberschreitung erfasst. Dazu ist ein drehfest mit dem Elektromotor 12 verbundenes Auslöseelement 41, insbesondere eine Nocke, vorgesehen. Das Auslöseelement 41 löst bei der Verschwenkung des Elektromotors 12 aufgrund der Drehmomentüberschreitung den Sensor 40 aus. Die Drehmomentüberschreitung wird anhand der Verdrehung der Motorbaugruppe 24 und damit auch des Elektromotors 12 festgestellt. Die Verdrehung hängt vom Drehmoment und von der Federkraft ab, wobei die Federkraft wiederum von den Eigenschaften der Federn 37, 38 und der Auslenkung der Federn 37, 38 bestimmt ist. Daher ist das auslösende Drehmoment durch die Bohrung 36 einstellbar, in welche die Federn 37, 38 eingreifen. Die Bohrungen 36 am äußeren Ende des Stegs 26 führen bei einem konstanten Drehmoment auf den Elektromotor 12 zu einer kleineren Verdrehung der Motorbaugruppe 24 als weiter innen befindliche Bohrungen 36. Wird die Drehmomentüberschreitung detektiert, kann der Elektromotor von einer Steuereinheit 42 (siehe Fig. 1) in einen spannungslosen Zustand geschaltet werden. Die Schiebetür 1 geht in diesem Fall automatisch in die Offenstellung über.

Wie aus Fig. 2 weiters ersichtlich, ist ein erster Endschalter 43 zur Erfassung der Offenstellung des Türblatts 5 und ein zweiter Endschalter 44 zur Erfassung der Schließstellung des Türblatts vorgesehen.

Fig. 3 zeigt eine Mitnahmeeinrichtung 18, die den Mitnahmebolzen 19 an der Mutter 20 in der mit dem Türblatt 5 bzw. dem Türoberteil 5A verbundene Aufnahme 22 aufnimmt.

Der Mitnahmebolzen 19 ragt in die Aufnahme 22 hinein. In der Aufnahme 22 ist ein Halter 45 vorgesehen, der eine zentrale Bohrung 46 aufweist. Der Mitnahmebolzen 19 wird von einer Buchse aufgenommen, welche wiederum in der zentralen Bohrung 46 des Halters 45 aufgenommen ist. Der Halter 45 ist in einer Aussparung 47 der Aufnahme 22 aufgenommen.

Fig. 3 zeigt weiters Teflonstreifen 48, die die Reibung zwischen dem Halter 45 und einer Innenwand der Aufnahme 22 im Bereich der Aussparung 47 verringern. Der Halter 45 ist mittels einer Abdeckplatte 49 in der Mitnahmeeinrichtung 18 befestigt. Dazu sind Schrauben 50 vorgesehen. Die Abdeckplatte 49 weist ein Langloch 51 auf, das eine Beweglichkeit des Halters 45 in der Aussparung 47 gewährleistet. Der Halter 45 hat in der Aussparung 47 in einer ersten Richtung parallel zum Türblatt 5 und senkrecht zur Längsachse der Spindel 13 ein erstes Spiel. In eine dritte Richtung entlang der Längsachse der Spindel 13 hat der Halter 45 in der Aussparung 47 kein Spiel. Der Mitnahmebolzen 19 ist in einer zweiten Richtung mit einem zweiten Spiel beweglich am Halter 45 angeordnet. Die zweite Richtung fällt mit der Längsachse des Mitnahmebolzens 19 zusammen und steht somit normal auf die Haupterstreckungsebene des Türblatts 5 und normal auf die Längsachse der Spindel 13. Die Teflonstreifen 48 beeinflussen das erste und das zweite Spiel im Wesentlichen nicht.

Die Mitnahmeeinrichtung 18 ist mittels weiterer Schrauben 52 mit der Türaufhängung 16 des Türoberteils 5A verbunden.

## Patentansprüche

1. Flugzeug-Schiebetür (1), aufweisend:
ein zwischen einer Schließstellung und einer Offenstellung in Öffnungs- bzw. Schließrichtung verschiebliches Türblatt (5) mit einem Türoberteil (5A) und einem Türunterteil (5B), welche in der Schließstellung in einem ausgezogenen Zustand und in der Offenstellung in einem zusammengeschobenen Zustand angeordnet sind,
eine zur Öffnungs- bzw. Schließrichtung geneigte Führungsschiene (9) zur Führung des Türblatts (5) zwischen der Schließ- und der Offenstellung,
eine Antriebseinrichtung (11) mit einem Elektromotor (12) zur Unterstützung der Bewegung des Türblatts (5) von der Offenin die Schließstellung,
wobei
die Antriebseinrichtung (11) eine mit dem Elektromotor (12) verbundene Spindel (13), insbesondere eine Kugelumlaufspindel, aufweist, welche zur Öffnungs- bzw. Schließrichtung geneigt ist,
**dadurch gekennzeichnet, dass**
das Türblatt (5) in einem spannungslosen Zustand des Elektromotors (12) entlang der Spindel (13) selbständig in die Offenstellung überführt wird.

2. Flugzeug-Schiebetür (1) nach Anspruch 1, **dadurch gekennzeichnet, dass** die Antriebseinrichtung (11) eine die Spindel (13) aufnehmende Mutter aufweist, welche durch Drehen der Spindel (13) mit dem Elektromotor (12) entlang der Spindel (13) wandert.

3. Flugzeug-Schiebetür (1) nach Anspruch 2, **dadurch gekennzeichnet, dass** die Mutter über eine Mitnahmeeinrichtung (18) mit einer Türaufhängung für das Türoberteil (16) verbunden ist.

4. Flugzeug-Schiebetür (1) nach Anspruch 3, **dadurch gekennzeichnet, dass** die Mitnahmeeinrichtung (18) ein mit der Mutter verbundenes Mitnahmeelement, insbesondere einen Mitnahmebolzen (19), und eine mit der Türaufhängung (16) verbundene Aufnahme (22) aufweist.

5. Flugzeug-Schiebetür (1) nach Anspruch 4, **dadurch gekennzeichnet, dass**
- das Mitnahmeelement in einer ersten Richtung parallel zum Türblatt (5) und senkrecht zur Längsachse der Spindel (13) beweglich mit der Aufnahme (22) an der Türaufhängung (16) verbunden ist und/oder dass
- das Mitnahmeelement in einer zweiten Richtung senkrecht zum Türblatt (5) und senkrecht zur Längsachse der Spindel (13) beweglich mit der Aufnahme (22) an der Türaufhängung (16) verbunden ist und/oder dass
- das Mitnahmeelement in einer dritten Richtung parallel zur Längsachse der Spindel (13) fest mit der Aufnahme (22) verbunden ist.

6. Flugzeug-Schiebetür (1) nach Anspruch 5, **dadurch gekennzeichnet, dass** die Aufnahme (22) eine Aussparung (47) aufweist, in welcher ein Halter (45) für das Mitnahmeelement in der ersten Richtung beweglich und in der dritten Richtung im Wesentlichen unbeweglich angeordnet ist, wobei das Mitnahmeelement in der zweiten Richtung beweglich am Halter (45) angeordnet ist.

7. Flugzeug-Schiebetür (1) nach einem der Ansprüche 1 bis 6, **dadurch gekennzeichnet, dass** eine Einrichtung (39) zur Erfassung einer Drehmomentüberschreitung des Elektromotors (12) vorgesehen ist, mit welcher ein blockierter Zustand des Türblatts (5) beim Überführen zwischen der Schließ- und der Offenstellung feststellbar ist.

8. Flugzeug-Schiebetür (1) nach einem der Ansprüche 1 bis 7, **dadurch gekennzeichnet, dass** der Elektromotor (12) verdrehbar an einem Halterahmen (23) der Antriebseinrichtung (11) gelagert ist.

9. Flugzeug-Schiebetür (1) nach Anspruch 8, **dadurch gekennzeichnet, dass** die Antriebseinrichtung (11) zumindest eine erste Feder (37) aufweist, welche den Elektromotor (12) aus einem in die eine Richtung verdrehten ersten Zustand in Richtung einer Neutralstellung drückt, wobei die Antriebseinrichtung (11) bevorzugt eine zweite Feder (38) aufweist, welche den Elektromotor (12) aus einem in die andere Richtung verdrehten zweiten Zustand in Richtung der Neutralstellung drückt.

10. Flugzeug-Schiebetür (1) nach einem der Ansprüche 7 bis 9, **dadurch gekennzeichnet, dass** die Einrichtung (39) zur Erfassung der Drehmomentüberschreitung des Elektromotors (12) einen Sensor (40) aufweist, welcher eine Verdrehung des Elektromotors (12) aufgrund der Drehmomentüberschreitung erfasst.

11. Flugzeug-Schiebetür (1) nach Anspruch 10, **dadurch gekennzeichnet, dass** die Einrichtung (39) zur Erfassung der Drehmomentüberschreitung des Elektromotors (12) ein drehfest mit dem Elektromotor (12) verbundenes Auslöseelement (41) aufweist, welches bei der Verdrehung des Elektromotors (12) aufgrund der Drehmomentüberschreitung den Sensor (40) auslöst.

12. Flugzeug-Schiebetür (1) nach einem der Ansprüche 7 bis 11, **dadurch gekennzeichnet, dass** die Antriebseinrichtung (11) eine Steuereinheit (42) aufweist, welche den Elektromotor (12) bei Erfassung des blockierten Zustands des Türblatts (5) in einen spannungslosen Zustand schaltet.

13. Flugzeug-Schiebetür (1) nach einem der Ansprüche 1 bis 12, **dadurch gekennzeichnet, dass** die Spindel (13) eine Übersetzung aufweist, mit welcher eine vollständige Umdrehung der Spindel (13) eine Bewegung des Türblatts (5) in Schließ- bzw. Offenrichtung von weniger als 30 mm, insbesondere von 5 mm bis 15 mm, bewirkt.

14. Flugzeug-Schiebetür (1) nach einem der Ansprüche 1 bis 13, **dadurch gekennzeichnet, dass** ein erster Endschalter (43) zur Erfassung der Offenstellung des Türblatts (5) und ein zweiter Endschalter (44) zur Erfassung der Schließstellung des Türblatts (5) vorgesehen sind.

15. Flugzeug, aufweisend:
einen Innenraum mit einem ersten Raumbereich und mit einem zweiten Raumbereich,
eine Flugzeug-Schiebetür (1) nach einem der Ansprüche 1 bis 14, welche zwischen dem ersten Raumbereich und dem zweiten Raumbereich des Innenraums angeordnet ist.

## Claims

1. An aircraft sliding door (1) comprising:
a door leaf (5), which is slidable between a closed position and an opened position in the opening and closing direction respectively, and has a door top part (5A) and a door bottom part (5B), which are arranged in a pulled-out state in the closed position and in a pushed-together state in the opened position,
a guide rail (9), inclined with respect to the opening and closing direction, for guiding the door leaf (5) between the closed position and the opened position,
a drive device (11) having an electric motor (12) for assisting the movement of the door leaf (5) from the opened position to the closed position,
whereby the drive device (11) comprises a spindle (13), in particular a ball screw spindle, which is connected to the electric motor (12) and is inclined to the opening and closing direction,
**characterised in that**
the door leaf (5) is automatically transferred to the opened position along the spindle (13) in a de-energised state of the electric motor (12).

2. The aircraft sliding door (1) according to claim 1, **characterised in that** the drive device (11) comprises a nut receiving the spindle (13), which nut travels along the spindle (13) by rotating the spindle (13) with the electric motor (12).

3. The aircraft sliding door (1) according to claim 2, **characterised in that** the nut is connected to a door suspension for the door top part (16) via an entraining device (18).

4. The aircraft sliding door (1) according to claim 3, **characterised in that** the entraining device (18) comprises an entraining element, in particular an entraining bolt (19), connected to the nut, and a receptacle (22) connected to the door suspension (16).

5. The aircraft sliding door (1) according to claim 4, **characterised in that**
- the entraining element is movably connected to the receptacle (22) on the door suspension (16) in a first direction parallel to the door leaf (5) and perpendicular to the longitudinal axis of the spindle (13) and/or **in that**
- the entraining element is movably connected to the receptacle (22) on the door suspension (16) in a second direction perpendicular to the door leaf (5) and perpendicular to the longitudinal axis of the spindle (13) and/or **in that**
- the entraining element is fixedly connected to the receptacle (22) in a third direction parallel to the longitudinal axis of the spindle (13).

6. The aircraft sliding door (1) according to claim 5, **characterised in that** the receptacle (22) has a recess (47) in which a holder (45) for the entraining element is arranged so as to be movable in the first direction and substantially immovable in the third direction, the entraining element being arranged on the holder (45) so as to be movable in the second direction.

7. The aircraft sliding door (1) according to any one of claims 1 to 6, **characterised in that** a device (39) for detecting a torque overrun of the electric motor (12) is provided, with which a blocked state of the door leaf (5) can be ascertained during the transfer between the closed position and the opened position.

8. The aircraft sliding door (1) according to any one of claims 1 to 7, **characterised in that** the electric motor (12) is rotatably mounted on a holding frame (23) of the drive device (11).

9. The aircraft sliding door (1) according to claim 8, **characterised in that** the drive device (11) comprises at least a first spring (37), which pushes the electric motor (12) from a first state rotated in one direction in the direction of a neutral position, wherein the drive device (11) preferably has a second spring (38), which pushes the electric motor (12) from a second state rotated in the other direction in the direction of the neutral position.

10. The aircraft sliding door (1) according to any one of claims 7 to 9, **characterised in that** the device (39) for detecting the torque overrun of the electric motor (12) comprises a sensor (40), which detects a rotation of the electric motor (12) due to the torque overrun.

11. The aircraft sliding door (1) according to claim 10, **characterised in that** the device (39) for detecting the torque overrun of the electric motor (12) comprises a triggering element (41) connected in a rotationally fixed manner to the electric motor (12), which triggers the sensor (40) when the electric motor (12) is rotated due to the torque overrun.

12. The aircraft sliding door (1) according to any one of claims 7 to 11, **characterised in that** the drive device (11) comprises a control unit (42), which switches the electric motor (12) to a de-energised state when the blocked state of the door leaf (5) is detected.

13. The aircraft sliding door (1) according to any one of claims 1 to 12, **characterised in that** the spindle (13) comprises a gear ratio with which a complete rotation of the spindle (13) causes a movement of the door leaf (5) in the closing and opening direction respectively of less than 30 mm, in particular from 5 mm to 15 mm.

14. The aircraft sliding door (1) according to any one of claims 1 to 13, **characterised in that** a first limit switch (43) is provided for detecting the opened position of the door leaf (5) and a second limit switch (44) is provided for detecting the closed position of the door leaf (5).

15. An aircraft comprising:
an interior with a first spatial area and with a second spatial area,
an aircraft sliding door (1) according to any one of claims 1 to 14, which is arranged between the first spatial area and the second spatial area in the interior.

## Revendications

1. Porte coulissante d'avion (1), comprenant :
un vantail de porte (5) pouvant être déplacé entre une position fermée et une position ouverte dans la direction d'ouverture et de fermeture, avec une partie supérieure de porte (5A) et une partie inférieure de porte (5B) qui, en position fermée, sont disposées dans un état déployé et, en position ouverte, dans un état replié,
un rail de guidage (9) incliné dans la direction d'ouverture ou de fermeture , pour guider le vantail de porte (5) entre la position fermée et la position ouverte, un dispositif d'entraînement (11) avec un moteur électrique (12) pour soutenir le mouvement du vantail de porte (5) de la position ouverte à la position fermée,
le dispositif d'entraînement (11) comportant une vis (13), en particulier une vis à billes, reliée au moteur électrique (12) et inclinée vers la direction d'ouverture ou fermeture, **caractérisé en ce que** le vantail de porte (5) est amené automatiquement en position ouverte le long de la vis (13) lorsque le moteur électrique (12) est hors tension.

2. Porte coulissante d'avion (1) selon la revendication 1, **caractérisée en ce que** le dispositif d'entraînement (11) comprend un écrou qui reçoit la vis (13) et qui se déplace le long de la vis (13) par rotation de la vis (13) avec le moteur électrique (12).

3. Porte coulissante d'avion (1) selon la revendication 2, **caractérisée en ce que** l'écrou est relié à une suspension de porte pour la partie supérieure de la porte (16) par l'intermédiaire d'un dispositif de prise (18).

4. Porte coulissante d'avion (1) selon la revendication 3, **caractérisée en ce que** le dispositif de prise (18) comporte un élément de prise relié à l'écrou, en particulier une goupille de prise (19), et un logement (22) relié à la suspension de porte (16).

5. Porte coulissante d'avion (1) selon la revendication 4, **caractérisée en ce que**
- l'élément de prise est relié de manière mobile dans une première direction parallèle au vantail de porte (5) et perpendiculaire à l'axe longitudinal de la vis (13) avec le logement (22) sur la suspension de porte (16) et/ou que - l'élément de prise est relié de manière mobile dans une deuxième direction perpendiculaire au vantail de porte (5) et perpendiculaire à l'axe longitudinal de la vis (13) avec le logement (22) sur la suspension de porte (16) et/ou **en ce que**
- l'élément d'entraînement est relié de manière mobile dans une troisième direction parallèle à l'axe longitudinal de la vis (13) avec le logement (22).

6. Porte coulissante d'avion (1) selon la revendication 5, **caractérisée en ce que** le logement (22) présente un évidement (47) dans lequel un support (45) pour l'élément de prise est disposé de manière mobile dans la première direction et essentiellement immobile dans la troisième direction, l'élément de prise étant disposé de manière mobile dans la deuxième direction sur le support (45).

7. Porte coulissante d'avion (1) selon l'une des revendications 1 à 6, **caractérisée en ce qu'**un dispositif (39) est prévu pour détecter un dépassement du couple du moteur électrique (12), qui permet de détecter un état bloqué du vantail de porte (5) lors du passage entre la position fermée et la position ouverte.

8. Porte coulissante d'avion (1) selon l'une des revendications 1 à 7, **caractérisée en ce que** le moteur électrique (12) est monté de manière rotative sur un cadre de support (23) du dispositif d'entraînement (11) .

9. Porte coulissante d'avion (1) selon la revendication 8, **caractérisée en ce que** le dispositif d'entraînement (11) comporte au moins un premier ressort (37) qui ramène le moteur électrique (12) d'un premier état en torsion dans un sens vers une position neutre, le dispositif d'entraînement (11) comportant de préférence un deuxième ressort (38) qui ramène le moteur électrique (12) d'un deuxième état en torsion dans l'autre sens vers la position neutre.

10. Porte coulissante d'avion (1) selon l'une des revendications 7 à 9, **caractérisée en ce que** le dispositif (39) destiné à détecter le dépassement du couple du moteur électrique (12) comporte un capteur (40) qui détecte une torsion du moteur électrique (12) due au dépassement du couple.

11. Porte coulissante d'avion (1) selon la revendication 10, **caractérisée en ce que** le dispositif (39) destiné à détecter le dépassement du couple du moteur électrique (12) comprend un élément de déclenchement (41) relié de manière solidaire en rotation au moteur électrique (12), qui déclenche le capteur (40) lors de la torsion du moteur électrique (12) due au dépassement du couple.

12. Porte coulissante d'avion (1) selon l'une des revendications 7 à 11, **caractérisée en ce que** le dispositif d'entraînement (11) comprend une unité de commande (42) qui, lorsqu'elle détecte que le vantail de porte (5) est bloqué, met le moteur électrique (12) hors tension.

13. Porte coulissante d'avion (1) selon l'une des revendications 1 à 12, **caractérisée en ce que** la vis (13) comporte un rapport de transmission grâce auquel une rotation complète de la vis (13) provoque un mouvement du vantail de porte (5) dans la direction de la fermeture ou de l'ouverture de moins de 30 mm, en particulier de 5 mm à 15 mm.

14. Porte coulissante d'avion (1) selon l'une des revendications 1 à 13, **caractérisée en ce qu'**un premier interrupteur de fin de course (43) est prévu pour détecter la position ouverte du vantail de porte (5) et un deuxième interrupteur de fin de course (44) est prévu pour détecter la position fermée du vantail de porte (5).

15. Avion, comprenant :
un espace intérieur avec une première zone et une deuxième zone, une
porte coulissante d'avion (1) selon l'une des revendications 1 à 14, qui est disposée entre la première zone et la deuxième zone de l'espace intérieur.
